(19) Europäisches Patentamt
European Patent Office
Office européen des brevets

(11) Veröffentlichungsnummer: **0 000 761**
**B1**

(12) **EUROPÄISCHE PATENTSCHRIFT**

(45) Veröffentlichungstag der Patentschrift: **25.11.81**

(51) Int. Cl.³: **C 08 G 18/14, C 08 J 9/00**

(21) Anmeldenummer: **78100555.8**

(22) Anmeldetag: **31.07.78**

(54) **Verfahren zur Herstellung von Urethangruppen aufweisenden Schaumstoffen.**

(30) Priorität: **11.08.77 DE 2736138**

(43) Veröffentlichungstag der Anmeldung:
**21.02.79 Patentblatt 79/4**

(45) Bekanntmachung des Hinweises auf die Patenterteilung:
**25.11.81 Patentblatt 81/47**

(84) Benannte Vertragsstaaten:
**BE DE FR GB NL SE**

(56) Entgegenhaltungen:
**DE - A - 2 533 074**

(73) Patentinhaber: **BAYER AG**
**Zentralbereich Patente, Marken und Lizenzen**
**D-5090 Leverkusen 1, Bayerwerk (DE)**

(72) Erfinder: **Meiners, Hans-Joachim, Dr.**
**Ringstrasse 25**
**D-5090 Leverkusen 17 (DE)**
Erfinder: **Moretto, Hans-Heinrich, Dr.**
**Formesstrasse 13**
**D-5000 Koeln 80 (DE)**
Erfinder: **de Montigny, Armand, Dr.**
**Walter-Flex-Strasse 17**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 761 B1

## Verfahren zur Herstellung von Urethangruppen aufweisenden Schaumstoffen

Urethangruppen aufweisende Schaumstoffe finden weite Anwendung, z.B. auf dem Gebiet der Isolierung, zur Herstellung von Strukturelementen oder für Polsterungszwecke.

Es ist auch bekannt, Urethangruppen aufweisende Schaumstoffe aus höhermolekularen Polyolen, z.B. Hydroxylgruppen aufweisenden Polyäthern, Polyisocyanaten, Wasser und/oder anderen Treibmitteln, in Gegenwart von Katalysatoren, Emulgatoren und Hilfsmitteln in Blöcken und in Formel herzustellen. Den Emulgatoren und Stabilisatoren fällt dabei im Reaktionsgemisch die Aufgabe zu, die Reaktionspartner zu homogenisieren und den gleichzeitig einsetzenden Schäumvorgang zu erleichtern und ein Zusammenfallen der Schaumstoffe nach Ende de Gasbildung zu verhindern. Die Katalysatoren sollen dafür sorgen, dass die während der Schaumstoffbildung ablaufenden Vorgänge in das gewünschte Gleichgewicht gebracht werden und mit der richtigen Geschwindigkeit ablaufen.

Dabei werden oft mindestens zwei Hydroxylgruppen aufweisende Polyäther, in denen mindestens ca. 10% der vorhandenen OH-Gruppen primäre OH-Gruppen sind und die z.B. ein Molekulargewicht von 400—10000 aufweisen oder mit organischen, ungesättigte Verbindungen gepfropfte Polyäther in Kombination mit den Polyisocyanaten verwendet, wobei vielfach spezielle Polyisocyanate eingesetzt werden.

Als spezielle Polyisocyanate kommen z.B. neben 2,4- und/oder 2,6-Toluylendiisocyanat, Gemischen aus Diphenylmethandiisocyanaten und Polyphenyl-polymethylen-polyisocyanaten (rohes MDI), Kombinationen aus Toluylendiisocyanaten und Polyphenylpolymethylenpolyisocyanaten, auch sogenannte "modifizierte Polyisocyanate" in Frage, z.B. Lösungen von Biuretgruppen aufweisenden Polyisocyanaten in biuretgruppenfreien Polyisocyanaten und/oder Lösungen von mindestens zwei NCO-Gruppen und mindestens eine N,N'-disubstituierte Allophansäureestergruppierung enthaltenden Polyisocyanaten in Allophansäureestergruppen-freien Polyisocyanaten und/oder Lösungen von Urethangruppen aufweisenden Polyisocyanaten in Urethangruppen-freien Polyisocyanaten und/oder Lösungen von Isocyanursäureringe enthaltenden Polyisocyanaten in Isocyanuratgruppen-freien Polyisocyanaten.

Die bisher bekannten Urethangruppen aufweisenden Schaumstoffe, hergestellt z, B. unter Verwendung der "modifizierten Polyisocyanate", weisen indessen oft den Nachteil auf, dass sie bei der Verschäumung Störungen in Form von Blasen unter den Schaumteil-Aussenseiten zeigen, die sich auch in das Innere des Schaumteils fortpflanzen können. Dieses Erscheinungsbild ist ausserordentlich nachteilig. z.B. bei der Fertigung von Formteilen, sei es für die Möbelindustrie oder Automobilindustrie, da sich z.B. auf feinen Bezugstoffen diese Blasenbildung deutlich abzeichnet. Durch Einsatz von Polysiloxan-Polyalkylenoxid-Copolymeren, wie sie als Schaumstabilisatoren handelsüblich sind, kann das angeführte Störungsbild nicht behoben werden, da in diesem Fall, selbst bei geringsten Mengen an Stabilisatoren, ein irreversibeler Schrumpf oder Kollaps auftritt und zu nicht verwertbaren Schaumstoffen führt.

Man hat nun bereits versucht, durch Mitverwendung von speziellen Siliciumverbindungen das geschilderte Störungsbild bei den Polyurethanschaumstoffen zu beheben (vgl. DT—OS 2 232 525 und 2 246 400). Diese Versuche haben indessen noch nicht zu in der Praxis allseits befriedigenden Ergebnissen geführt. Insbesondere hat sich gezeigt, dass auch bei Mitverwendung der in den Offenlegungsschriften näher beschriebenen Siliciumverbindungen oft ein Schrumpfen des Schaumstoffs nicht völlig vermieden werden kann.

Auch mit der Lehre der DT—OS 2 337 140, wonach Verbindungen der Formel

$$(T)_aSi\ [OSi(CH_3)R'_2]_{4-a} \qquad (I)$$

in der T z.B. $CH_3$

R' z.B. $CH_2Cl$ und $CH_3$

a z.B. die Zahl zwei bedeuten, verwendet werden, wird versucht, die oben erwähnten Störungen zu beheben.

Wie aus der Beschreibung dieser DT—OS hervorgeht bedeutet der Index a eine ganze ungebrochene Zahl. Die Formel (I) gibt somit diskrete Verbindungen (z.B. mit definiertem Siedepunkt) und keine Gemische statistischer Verteilung wieder. Es zeigt sich aber, daß diese (diskreten) Verbindungen keine ausreichende stabilisierende Wirkung entfalten. So ist z.B. die (unter die Formel I fallende) Verbindung

$$\begin{array}{ccccccccc} & & CH_3 & & CH_3 & & CH_3 & & \\ & & | & & | & & | & & \\ ClCH_2 & — & Si & —O— & Si & —O— & Si & — & CH_2—Cl \\ & & | & & | & & | & & \\ & & CH_3 & & CH_3 & & CH_3 & & \end{array} \quad \text{(II) Reinheit: 99.8\%ig)}$$

nicht einmal in der Lage, solche (handelsüblichen) Schaumstoffsystem zu stabilisieren, die in Hinsicht auf Stabilisierung nur wenig anspruchsvoll sind.

Die DT—OS 2 533 074 versucht zu zeigen, daß (im Gegensatz zur Lehre Der GB—PS 795 335) nur durch eine Auswahl nieder-molekularer Anteile von 4 bis maximal 12 Siloxyeinheiten aus linearen Dimethylpolysiloxanen die von der Praxis gewünschten Eigenschaften von Polyurethanschaumstoffen erhalten werden; bereits geringste Mengen höhermolekularer linearer Dimethylpolysiloxane sollen angeblich das Eigenschaftsbild erheblich verschlechtern. Überraschenderweise hat sich jedoch ergeben, daß mit der Verwendung der erfindungsgemäß einzusetzenden Gemische von organofunktionellen Polysiloxanen keine Einschränkung dieser Art im nieder- und höhermolekularen Bereich notwendig ist.

Der Einsatz von diskreten Silicium-Verbindungen sowie von Zusammensetzungen, die einen zusätzlichen Trennaufwand erfordern, ist naturgemäß wirtschaftlich weniger interessant.

Es wurde nun ein Verfahren zur Herstellung von nicht schrumpfenden, Urethangruppen enthaltenden Schaumstoffen gefunden, wobei die geschilderten Nachteile vermieden werden können und die Herstellung von einwandfreien Schaumstoffen gelinget.

Gegenstand der vorliegenden Erfindung ist ein Verfahren zur Herstellung von kalthärtenden, nicht schrumpfenden Urethangruppen aufweisenden Schaumstoffen durch Umsetzung von mindestens zwei aktive Wasserstoffatome aufweisenden Verbindungen vom Molekulargewicht 400 bis 100 000 mit Polyisocyanaten in Gegenwart von Wasser und/oder organischen Treibmitteln, Siliciumverbindungen und gegebenenfalls in Gegenwart von Katalysatoren und weiteren Hilfsmitteln, dadurch gekennzeichnet, daß als Siliciumverbindungen Gemische von Verbindungen der allgemeinen Formel

$$R^1R_2SiO—[R_2SiO]_n—[RR^2SiO]_{n'}—SiR_2R^1$$

wobei R einen Alkyl- oder Alkenylrest bis zu 3 C-Atomen, vorsugsweise einen Methylrest,
$R^2$ einen Chlormethylrest,
$R^1$ einen Rest $R^2$ bzw. R,
n' eine ganze oder gebrochene Zahl von 0 bis 9,
n eine ganze oder gebrochene Zahl von 0 bis 9,
und $n + n' \leqslant 10$ bedeuten
und $R^1$ gleich $R^2$ wird, wenn $n' = 0$ ist,
in Mengen von 0,01 bis 2,0 Gew-%, vorzugsweise 0,1—1,0 Gew-% bezogen auf die aktive Wasserstoffatome aufweisende Verbindungen vom Molekulargewicht 400—100 000, verwendet werden.

Da die Indizes n und n' die mittlere Zusammensetzung der Gemische der Siliciumverbindung beschreiben, können bei einer Zusammensetzung $n + n' = 10$ definierte Verbindungen mit höheren diskreten Indizes auftreten. Dies ist in den Beispielen, wo auf die Herstellung dieser Verbindungen eingegangen wird, anhand eines Gaschromatogramms näher erläutert.

Die erfindungsgemäß zu verwendenden Gemische von Verbindungen sind durch klassische Hydrolyse von Chlorsilanen, gefolgt von einer an sich bekannten Äquilibrierung, leicht und oft in nahezu 100 %iger Ausbeute herstellbar.

Typische Beispiele für solche Verbindungsgemische soll folgende Auswahl zeigen.

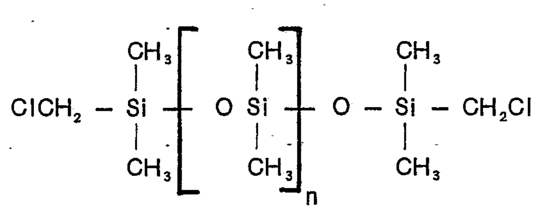

n : ca. 1

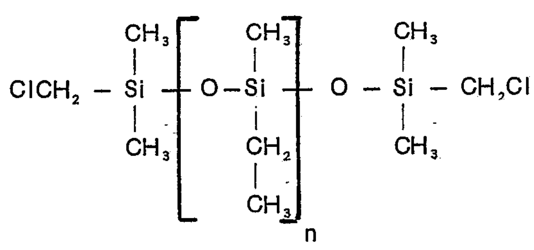

n : ca. 1

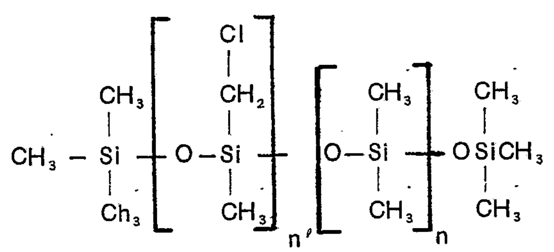

n' : ca. 0,5

n : ca. 1

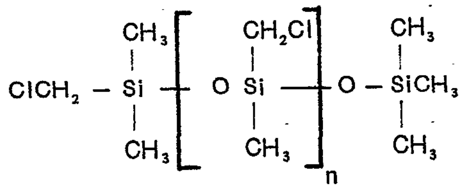

n': ca. 1

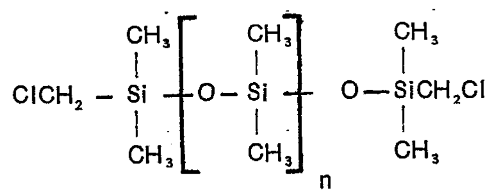

n : ca. 2

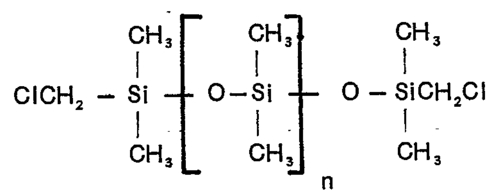

n : ca. 3

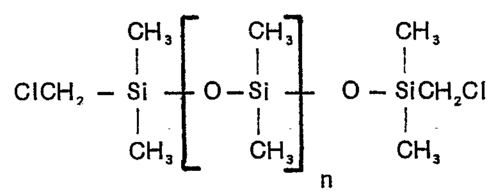

n : ca. 0.5

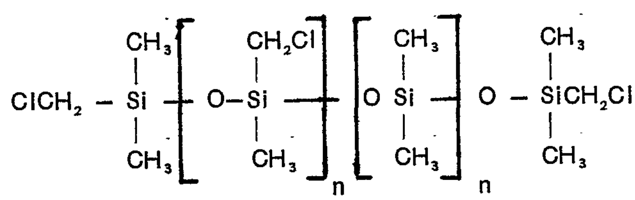

n': ca. 3
n : ca. 3

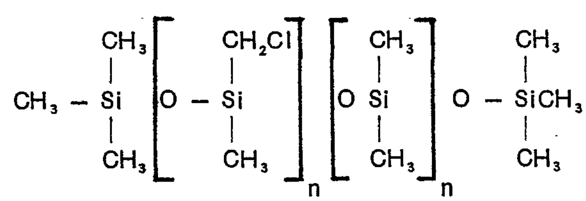

n': ca. 2
n : ca. 5

Die mit schaumfähigen Polyurethansystemen gut verträglichen Verbindungsgemische sind uneingeschränkt in Polyolen lagerfähig, so dass keinerlei Probleme bei der Lagerhaltung auftreten. Sie begünstigen offensichtlich die Keimbildung beim Schaumvorgang und verleihen dem Schaumstoffsystem ein ausgezeichnetes Fließvermögen, was im Falle der Herstellung von Schaumstoffen durch Formgebung bei langen Fließwegen bzw. stark sich verändernden Querschnitten die Voraussetzung zur optimalen Fertigung darstellt.

Erfindungsgemäss werden nicht nur Schaumstoffe erhalten, die hervorragende physikalische Daten aufweisen, sondern es werden auch Produkte erhalten, die bei einer rein subjektiven Betrachtungsweise einen guten Eindruck hinterlassen.

So wirken z.B. der Griff und die Elastizität auf die Prüfperson ausgesprochen "sympathisch".

Ein Vorteil der Erfindung besteht auch darin, dass die erfindungsgemäss zu verwendenden Verbindungsgemische vortrefflich auf die entsprechenden Schaumstoffsysteme abgestimmt werden können. Obwohl bekannt ist, dass die Gesamtzahl der Siloxyeinheiten für die stabilisierende Wirkung verantwortlich ist (DT—AS 2 402 691), wurde durch die vorliegende Erfindung gefunden, dass durch eine Variation der Organosiloxyeinheiten innerhalb einer bestimmten Gesamtzahl von Siloxyeinheiten eine zusätzliche Feinabstimmung in der stabilisierenden Wirkung möglich ist. Hierdurch gelingt es, (je nach Verhältnis der Indexzahlen n und n' zueinander) die Stabilisierung während des Schäumvorganges so zu steuern, dass extrem stabilisatorbedürftige, schäumfähige Polyurethansysteme einerseits wie

auch nahezu sich selbst stabilisierende Systeme andererseits zu hervorragenden, nicht schrumpfenden Schaumstoffen umgesetzt werden können.

Als erfindungsgemäß einzusetzende Ausgangskomponenten kommen aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785 amerikanische Patentschrift 3 401 190), 2,4- und 2,6-Hexahydrotoluylendiisocyanat sowie beliebige Gemische dieser Isomeren, Hexahydro-1,3-und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den britischen patentschriften 874 430 und 848 671 beschrieben werden, m- und p-Isocyanatophenylsulfonyl-isocyanate gemäß der amerikanischen Patentschrift 3 454 606, perchlorierte Arylpolyisocyanate, wie sie z.B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z.B. in der britischen Patenschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B, in der amerikanischen Patentschrift 3 001 973, in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1,101,394 (amerikanische Patentschriften 3 124 605 und 3 201 372) sowie in der britischen Patentschrift 899 050 beschrieben werden, durch Telomerisationsreaktionen hergestellte Polyisocyanate, wie sie z.B. in der amerikanischen Patentschrift 3 654 106 beschrieben werden, Estergruppen aufweisende Polyisocyanate, wie sie zum Beispiel in den britischen Patentschriften 956 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385 und polymere Fettsäurereste enthaltende Polyisocyanate gemäß der amerikanischen Patentschrift 3 455 883.

Es ist auch möglich, die bei der Technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Erfindungsgemäß einzusetzende Ausgangskomponenten sind ferner Verbindungen mit mindestens zwei gegenüber Isocyanaten reaktionsfähigen Wasserstoffatomen von einem Molekulargewicht in der Regel von 400—100000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10000, vorzugsweise 1000 bis 6000, z.B. mindestens zwei, in der Regel 2 bis 8, vorzugsweise aber 2 bis 4, hydroxylgruppen aufweisende Polyester, Polyäther, Polythioäther, Polyacetale, Polycarbonate und Polyesteramide, wie sie für die Herstellung von homogenen und von zellförmigen Polyurethanen and sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren, Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol(1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäss in Frage kommenden und sogar bevorzugten, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, 4,4'-Dihydroxy-diphenylpropan, Anilin, Äthanolamin oder Äthylendiamin hergestellt. Auch Sucrosepolyäther, wie sie z.B. in den deutschen Auslegeschriften 1 176 358 und 1 064 938 beschrieben werden, kommen erfindungsgemäss in Frage. Veilfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z.B. durch Polymerisation von Styrol und Acrylnitril in Gegenwart von Polyäthern entstehen (amerikanische Patentschriften 3 383 351, 3 304 273, 3 523 093, 3 110 695, deutsche Patentschrift 1 152 536) sind geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester oder Polythioätheresteramide.

Als Polyacetale kommen z.B. die aus Glykolen, wie Diäthylenglykol. Triäthylenglykol, 4,4'-Dioxäthoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol oder Tetraäthylenglykol mit Diarylcarbonaten, z.B. Diphenylcarbonat, oder Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxide an Phenol-Formaldehyd-Harze oder auch an Harnstoff-Formaldehydharze sind erfindungsgemäß einsetzbar.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45—71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400—100000, z.B. Mischungen von Polyäthern und Polyestern, eingesetzt werden.

Als erfindungsgemäß gegebenenfalls einzusetzende Ausgangskomponenten kommen auch Verbindungen mit mindestens zwei gegenüber Isocyanaten reaktionsfähigen Wasserstoffatomen von einem Molekulargewicht 32—400 in Frage. Auch in diesem Fall versteht man hierunter Hydroxylgruppen und-oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt: Äthylenglykol, Propylenglykol- (1,2) und -

(1,3), Butylenglykol-(1,4) und -(2,3), Pentandiol-(1,5), Hexandiol-(1,6), Octandiol-(1,8), Neopentylglykol, 1,4-Bis-Hydroxymethyl-cyclohexan, 2-Methyl-1,3-Propandiol, Glycerin, Trimethylolpropan, Hexantriol-(1,2,6), Trimethyloläthan, Pentaerythrit, Chinit, Mannit und Sorbit, Diäthylenglykol, Triäthylenglykol, Tetraäthylenglykol, Polyäthylenglykole mit einem Molekulargewicht bis 400 Dipropylenglykol, Polypropylenglykole mit einem Molekulargewicht bis 400, Dibutylenglykol, Polybutylenglykole mit einem Molekulargewicht bis 400, 4,4'-Dihydroxydiphenylpropan, Di-hydroxymethyl-hydrochinon, Äthanolamin, Diäthanolamin, Triäthanolamin, 3-Aminopropanol, Äthylendiamin, 1,3-Diaminopropan, 1-Mercapto-3-aminopropan, 4-Hydroxy- oder -Amino-phthalsäure, Bernsteinsäure, Adipinsäure, Hydrazin, N,N'-Dimethylhydrazin, 4,4'-Diaminodiphenylmethan, Toluylendiamin, Methylen-bis-chloranilin, Methylen-bis-anthranilsäureester Diaminobenzoesäureester und die isomeren Chlorphenylendiamine.

Auch in Diesem Fall können Mischungen von verschiedenen Verbindungen mit mindestens zwei gegenüber Isocyanaten reaktionsfähigen Wasserstoffatomen mit einem Molekulargewicht von 32—400 verwendet werden.

Erfindungsgemäß können jedoch auch Polyhydroxylverbindungen eingesetzt werden, in welchen hochmolekulare Polyaddukte bzw. Polykondensate in feindisperser oder geloster Form enthalten sind. Derartige modifizierte Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) direkt in situ in den oben genannten, Hydroxylgruppen aufweisenden Verbindungen ablaufen läßt. Derartige Verfahren sind beispielsweise in den Deutschen Auslegeschriften 1 168 075 und 1 260 142, sowie den Deutschen Offenlegungsschriften 2 324 134, 2 423 984, 2 512 385, 2 513 815, 2 550 796, 2 550 797, 2 550 833 und 2 550 862 beschrieben. Es ist aber auch möglich, gemäß US-Patent 3 869 413 bzw. Deutscher Offenlegungsschrift 2 550 860 eine fertige wässrige Polymerdispersion mit einer Polyhydroxylverbindung zu vermischen und anschließend aus dem Gemisch das Wasser zu entfernen.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Erfindungsgemäß werden Wasser und/oder leicht flüchtige organische Substanzen als Treibmittel mitverwendet. Als organische Treibmittel kommen z.B. Aceton, Äthylacetat, halogensubstituierte Alkane wie Methylen-chlorid, Chloroform, Äthylen-chlorid, Vinylidenchlorid, Mono-fluortrichlormethan, Chlordifluormethan, Dichlordifluormethan, ferner Butan, Hexan, Heptan oder Diäthyläther infrage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchten, Carl-Hanser-Verlag, München 1966, z.B. auf den Seiten 108 und 109, 453 bis 455 und 507 bis 510 beschrieben.

Erfindungsgemäß werden ferner oft Katalysatoren mitverwendet. Als mitzuverwendende Katalysatoren kommen solche der an sich bekannten Art infrage, z.B. tertiäre Amine, wie Triäthylamin, Tributylamin, N-Methyl-morpholin, N-Äthyl-morpholin, N-Cocomorpholin, N,N,N',N'-Tetramethyläthylendiamin, 1,4-Diaza-bicyclo-(2,2,2)-octan, N-Methyl-N'-dimethylaminoäthyl-piperazin, N,N-Dimethylbenzylamin, Bis-(N,N-diäthylaminoäthyl)-adipat, N,N-Diäthylbenzylamin, Pentamethyldiäthylentriamin, N,N-Dimethylcyclohexylamin, N,N,N',N'-Tetramethyl-1,3-butandiamin, N,N-Dimethyl-ß-phenyläthylamin, 1,2-Dimethylimidazol, 2-Methylimidazol. Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol in Frage.

Gegenüber Isocyanatgruppen aktive Wasserstoffatome aufweisende tertiäre Amine als Katalysatoren sind z.B. Triäthanolamin, Triisopropanolamin, N-Methyldiäthanolamin, N-Äthyl-diäthanolamin, N,N-Dimethyl-äthanolamin, sowie deren Umsetzungsprodukte mit Alkylenoxiden, wie Propylenoxid und/oder Äthylenoxid.

Als Katalysatoren kommen ferner Silaamine mit Kohlenstoff-Silizium-Bindungen, wie sie z.B. in der deutschen Patentschrift 1 229 290 (entsprechend der amerikanischen Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren, verwendet werden.

Als organische Zinnverbindungen kommen vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat

oder Dioctylzinndiacetat in Betracht. Selbstverständlich können alle obengenannten Katalysatoren als Gemische eingesetzt werden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Menge an Verbindungen mit mindestens zwei gegenüber Isocyanaten reaktionsfähigen Wasserstoffatomen von einem Molekulargewicht von 400 bis 100000, eingesetzt.

Erfindungsgemäß können auch oberflächenaktive Zusatzstoffe, wie Emulgatoren und Schaumstabilisatoren mitverwendet werden. Als Emulgatoren kommen z.B. die Natriumsalze von Ricinusölsulfonaten oder Salze von Fettsäuren mit Aminen wie ölsaures Diäthylamin oder stearinsaures Diäthanolamin infrage. Auch Alkali-oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Erfindungsgemäß können ferner auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Barimsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der amerikanischen Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung wird erfindungsgemäß die Verschäumung oft in Formen durchgeführt. Dabei wird das Reaktionsgemisch in eine Form eingetragen. Als Formmaterial kommt Metall, z.B. Aluminium, oder Kunststoff, z.B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, es kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den amerikanischen Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den deutschen Offenlegungsschriften 2 121 670 und 2 307 589 bekanntgeworden sind.

Selbstverständlich können aber auch Schaumstoffe durch Blockverschäumung hergestellt werden.

Erfindungsgemäß werden bevorzugt kalthärtende Schaumstoffe herzustellen (vgl. britische Patentschrift 1 162 517, deutsche Offenlegungsschrift 2 153 086).

Die nach der Erfindung erhältlichen Produkte finden z.B. Anwendung als Polstermaterialien.

## Beispiele

*Herstellung der erfindungsgemäß zu verwendenden Gemische von Siliciumverbindungen*

Durch klassische, an sich bekannte Cohydrolyse wird ein Rohhydrolysat mit der gewünschten Zusammensetzung hergestellt.

Das getrocknete Rohprodukt wird—wie ebenfalls bekannt—mit einem sauren Katalysator äquilibriert.

Zur näheren Erläuterung sei nachfolgend die Herstellung eines Produktes der globalen Zusammensetzung

$$ClCH_2(CH_3)_2Si—O\ [(CH_3)_2SiO]_nSi(CH_3)_2CH_2Cl$$

in der n ca. zwei bedeutet, beschrieben:
10 Mol (1430 g) Chlormethyldimethylchlorsilan werden mit
10 Mol (1290 g) Dimethyldichlorsilan vermischt und—über zweit Stunden verteilt—in 5 Liter Wasser gegeben.

Nachdem 30 Minuten gerührt wurde, werden die beiden Phasen sorgfältig getrennt und das Rohhydrolysat über $Na_2SO_4$ getrocknet; anschliessend wird bei 150°C mit 3% getrockneter Bleicherde während 5 Stunden äquilibriert. Das äquilibrierte vom Katalysator durch Filtration befreite Produkt ist transparent und nahezu farblos.
Ausbeute: 1816 g (96% d.Th.)
$n_D^{20}$: 1.4254
Cl-Wert (1t. Ansatz) : 18.73%
Cl-Wert (gefunden) : 18.4%

Das erhaltene Produkt mit dem Globalindex n ca. 2 wurde gaschromatographisch in seine diskreten Bestandteile

$$ClCH_2(CH_3)_2SiO[Si—O(CH_3)_2]_xSi(CH_3)_2CH_2—Cl$$

in denen x eine ganze ungebrochene Zahl bedeutet, zerlegt:

| | |
|---|---|
| Octamethylcyclotetrasiloxan | 1.07% |
| x=0 | 25.42% |
| x=1 | 19.99% |
| x=2 | 15.32% |
| x=3 | 11.21% |
| x=4 | 7.94% |
| x=5 | 5.57% |
| x=6 | 3.85% |
| x=7 | 2.80% |
| x=8 | 1.94% |
| x=9 | 1.16% |

Die weiteren höhermolekularen Produkte konnten nicht mehr mit Sicherheit identifiziert werden.
Wie schon erwähnt, können bei einer Globalzusammensetzung, die durch ca. 2 bestimmt ist, durchweg definierte, durch ihren Siedepunkt charakterisierte Verbindungen mit einem Index x auftreten, dessen numerischer Wert grösser oder kleiner n ist.

a) Die nachfolgend aufgeführten Beispiele 1—3 wurden unter absolut identischen Verfahrens- und Versuchsbedingungen durchgeführt.

| | |
|---|---|
| Temperatur der Komponenten | : +25°C |
| Drehzahl des Rührers | : 1700 U/min |
| Mischzeit | : 8 sec |
| Genauigkeit der Dosierung | |
| Isocyanat, Polyol | : ± 0,1 g |
| Wasser, Katalysatoren, Siliziumverbindung | : ± 0,002 g |
| Anzahl der Probekörper pro Qualität | : 10 |

b) Die in den Tabellen aufgeführten Treibreaktionsdaten (Endhöhe, relat, Startzeit, maximale Schaumgeschwindigkeit, Steigzeit) wurden aus Weg-Zeit-Diagrammen ermittelt, die mit einem üblichen Wegaufnehmer erhalten wurden. Dabei konnte auch das Schaumverhalten (Setzen, Schrumpf) registriert werden.

c) Die Strömungswiderstände wurden nach der Dow-air-flow-Methode in mmWs bestimmt und sind ein Maß für die Offenzelligkeit.

Die übrigen mechanischen Werte wurden nach folgenden DIN-Normen gemessen:

| | | |
|---|---|---|
| Rohdichte | : | DIN 53420 |
| Sugfestigkeit, Bruchdehnung | : | DIN 53571 |
| Stauchhärte | : | DIN 53577 |

Beispiel 1

A) 50 Gewichtsteile eines auf Trimethylolpropan gestarteten Polypropylenglykols, das mit Äthylenoxid so modifiziert wurde, dass endständig 90% primäre Hydroxylgruppen bei einer OH-Zahl von 28 resultieren, und 50 Gewichtsteile eines auf Trimethylolpropan gestarteten Polypropylentriols, das mit Äthylenoxid so modifiziert wurde, dass endständig 85% primäre Hydroxylgruppen resultieren, welches zudem mit Acrylnitril und Styrol (im Verhältnis 60 : 40 Gew.-%) gepfropft wurde und eine OH-Zahl von 28 aufwies, 2,7 Gewichtsteile Wasser
0,15 Gewichtsteile Diazabicyclo-2,2,2-octan (als Katalysator),
0.08 Gewichtsteile 2,2'-Dimethylaminodiäthyläther (als Katalysator).

B) 0,05 Gewichtsteile der Siliziumverbindung der Formel

$$R^1R_2SiO—[R_2SiO]_n—[RR^2SiO]_{n'}—SiR_2R^1$$

in welcher $R^1$ und $R^2$ für Chloromethyl, R für Methyl, n' für 0 und n für 1, 2 oder 3 stehen, wurden vermischt mit

C) 34,0 Gewichtsteilen eines Gemisches aus 80 Gew.-% Toluylendiisocyanat (2,4- und 2,6-Isomeren im Gewichtsverhältnis 80:20%) und 20 Gew.-% eines Polyphenyl-polymethylen-polyisocyanates, welches durch Anilin-Formaldehyd-Kondensation und nachfolgende Phosgenierung erhalten worden ist, und in einem Päckchen zur Reaktion gebracht.

D) Man erhält Schaumstoffe mit folgenden Reaktionsdaten und mechanischen Eigenschaften:

| | | n=1 | n=2 | n=3 |
|---|---|---|---|---|
| Endhöhe | mm | 155 | 172 | 175 |
| Relat. Startzeit | sec | 14,1 | 14,2 | 14,2 |
| Max. Schaumgeschw. | mm/sec | 5,0 | 5,3 | 5,2 |
| Steigzeit | sec | 102 | 108 | 138 |
| Strömungswiderst. | mmWs | 30 | 120 | geschlossen |
| Schaumverhalten (Setzen/Schrumpfen) | % | 5 | 6 | 8 |
| Rohdichte | kg/m³ | 41,2 | 41,6 | (40,6) |
| Zugfestigkeit | KPa | 100 | 150 | (100) |
| Bruchdehnung | % | 120 | 150 | (130) |
| Stauchhärte | KPa | 3,55 | 3,4 | (3,3) |

Da immer die gleiche Konzentration der Siliziumverbindungen -unabhängig von n—eingesetzt wurde, sind die mechanischen Daten dar Schaumstoffe bei n=3 infolge von Geschlossenzelligkeit in

Klammern gesetzt. Die Konzentration von 0,05 Gewichtsteilen der eingesetzten Siliziumverbindung mit n=3 war schon zu hoch.

Beispiel 2

A) 100 Gewichtsteile eines Polyolgemisches gemäss Beispiel 1 A

B) 1,0 Gewichtsteile einer Siliziumverbindung gemäß der in Beispiel 1 B) genannten Formel, in welcher $R^1$ und R für Methyl, $R^2$ für Chloromethyl, n für 0 und n' für 1,2 oder 3 stehen, wurden vermischt mit

C) 34.0 Gewichtsteilen eines Isocyanatgemisches gemäss Beispiel 1 C und in einem Päckchen zur Reaktion gebracht.

D) Man erhält Schaumstoffe mit folgenden Reaktionsdaten und mechanischen Eigenschaften:

| | | n'=1 | n'=2 | n'=3 |
|---|---|---|---|---|
| Endhöhe | mm | 182 | 193 | 189 |
| Relat. Starzeit | sec | 12,5 | 12,7 | 12,7 |
| Max. Schaumgeschw. | mm/sec | 6,2 | 6,3 | 6,3 |
| Steigzeit | sec | 110 | 140 | 130 |
| Strömungswiderst. | mmWs | 80 | 400 | 300 |
| Schaumverhalten (Setzen/Schrumpfen) | % | 8 | 7 | 4 |
| Rohdichte | kg/m³ | 42 | 37 | 38 |
| Zugfestigkeit | KPa | 110 | 105 | 108 |
| Bruchdehnung | % | 135 | 120 | 140 |
| Stauchhärte | KPa | 3,3 | 3,2 | 3,3 |

Beispiel 3

A) 100 Gewichtsteile eines Polyolgemisches gemäss Beispiel 1 A.

B) 1,0 Gewichtsteile einer Siliziumverbindung der in Beispiel 1 B) genannten Formel, in welcher $R^1$ und R für Methyl, $R^2$ für Chloromethyl, n' für 1 und n für 0,02 stehen, wurden vermischt mit

C) 34.0 Gewichtsteilen eines Isocyanatgemisches gemäss Beispiel 1 C und in einem Päckchen zur Reaktion gebracht.

D) Man erhält Schaumstoffe mit folgenden Reaktionsdaten und mechanischen Eigenschaften:

| | | |
|---|---|---|
| Endhöhe | mm | 175 |
| Relat. Startzeit | sec | 17,2 |
| Maxim. Schaumgeschw. | mm/sec | 5,2 |
| Steigzeit | sec | 80 |
| Strömungswiderst. | mmWs | 20 |
| Schaumverhalten (Setzen/Schrumpfen) | % | 5 |
| Rohdichte | kg/m³ | 32 |
| Zugfestigkeit | KPa | 95 |
| Bruchdehnung | % | 200 |
| Stauchhärte | KPa | 1,3 |

Die Beispiele 1 bis 3 zeigen, dass es
a) durch die Wahl der obengenannten Siliziumverbindung mit unterschiedlichem n oder
b) mit unterschiedlichem n' oder
c) mit unerschiedlicher Kombination von n oder n'
hervorragend möglich ist, die Stabilisierung der Schaumstoffe, die Offenzelligkeiten, die Endhöhen und das Scnaumverhalten gezielt und in weitem Bereich maßgeschneidert abgestuft einzustellen. Dabei ist die Konzentration je nach Typ der Siliziumverbindung von extrem geringen bis zu grossen Mengen variabel.

Die Vernetzungsaktivitäten werden während der Schaumherstellung nicht tangiert, während die Treibaktivitäten lediglich in der letzten Phase (Steigzeit) etwas beeinflusst werden.

Mit der unter Beispiel 1 beschriebenen Rezeptur sowie mit den in Beispiel 2 und 3 beschriebenen Silikonen lassen sich Formschäume herstellen, welche keine Randzonenstörungen oder Bläschenbildung unter der Oberfläche aufweisen.

Die nachfolgend aufgeführten Beispiele wurden unter für die Schaumherstellung üblichen Bedingungen durchgeführt.

Beispiel 4

A) 100 Gewichtststeile eines auf Trimethylolpropan gestarteten Polypropylentriols, das mit Äthylenoxid so modifiziert wurde, dass endständig 80% primäre Hydroxylgruppen bei einer OH-Zahl von 28 resultieren,

3,2 Gewichtsteile Wasser
0,3 Gewichtsteile Diazabicyclo-2,2,2-octan
2,0 Diäthanolamin
3,0 Glycerin
2,0 Trichloräthylphosphat

B) 0,9 Gewichtsteile einer Siliziumverbindung gemäß der in Beispiel 1 B) genannten Formel, in welcher $R^1$ und $R^2$ Chlormethyl, R für Methyl, n' für 3 und n für 3 stehen, wurden vermischt mit

C) 56,3 Gewichtsteilen eines Allophanat-modifizierten Toluylendiisocyanats (2,4- und 2,6-Isomeren im Gewichtsverhältnis 80:20 Gew.-%) des NCO-Gehaltes 40,1—40,9%.

D) Man erhält Schaumstoffe mit folgenden Reaktionsdaten und mechanischen Eigenschaften:

| | | |
|---|---|---|
| Steigzeit | sec | 59 |
| Strömungswiderst. | mmWs | 105 |
| Rohdichte | Kg/m³ | 34 |
| Zugfestigkeit | KPa | 80 |
| Bruchdehnung | % | 105 |
| Stauchhärte | KPa | 1,3 |

Beispiel 5

A) 100 Gewichtsteile eine Polyätherdispersion, hergestellt aus einem Polyäther aus Propylenoxid, Äthylenoxid und Trimethololpropan (Hydroxylzahl 35, ca. 70% primäre Hydroxylgruppen), Toluylendiisocyanat, 2,4 und 2,6 Isomers im Gewichtsverhältnis 80:20) und Hydrazinhydrat,

3,0 Gewichtsteile Wasser
0,2 Gewichtsteile Diazabicyclo-2,2,2,-octan

2,0 Gewichtsteile Diäthanolamin }
0,15 Gewichteile Zinn (II)-äthylhexoat) } als Vernetzer

2,0 Gewichtsteile Trichloräthylphosphat

B) 0,6 Gewichtsteile einer Siliziumverbindung gemäß der in Beispiel 1 B) genannten Formel, in welcher $R^1$ und $R^2$ für Chloromethyl, R für Methyl, n' für 0 und n für 2 Stehen, wurden vermischt mit

C) 38.5 Gewichtsteilen Toluylendiisocyanat (2,4- und 2,6 Isomeres im Gewichtsverhältnis 80:20).

D) Man erhält Schaumstoffe mit folgenden Reaktionsdaten und mechanischen Eigenschaften:

| | | |
|---|---|---|
| Steigzeit | sec | 72 |
| Strömungswiderst. | mmWs | 135 |
| Rohdichte | $kg/m^3$ | 33 |
| Zugfestigkeit | KPa | 130 |
| Bruchdehnung | % | 120 |
| Stauchhärte | KPa | 3,9 |

**Patentansprüche**

1. Verfahren zur Herstellung von nicht schrumpfenden, Urethangruppen aufweisenden Schaumstoffen durch Umsetzung von mindestens zwei aktive Wasserstoffatome aufweisenden Verbindungen vom Molekulargewicht 400 bis 100 000 mit Polyisocyanaten, in Gegenwart von Wasser und/oder organischen Treibmitteln Siliciumverbindungen und gegebenenfalls in Gegenwart von Katalysatoren und weiteren Hilfsmitteln, dadurch gekennzeichnet, daß als Siliciumverbindungen Gemische von Verbindungen der allgemeinen Formel

$$R^1R_2SiO—[R_2SiO]_n—[RR^2SiO]_{n'}—SiR_2R^1$$

wobei R einen Alkyl- bzw. Alkenylrest bis zu 3 C-Atomen,
$R^2$ einen Chlormethylrest,
$R^1$ einen Rest $R^2$ bzw. R,
n' eine ganze oder gebrochene Zahl von 0 bis 9,
n eine ganze gebrochene Zahl von 0 bis 9,
$n + n' \leq 10$ bedeuten,

wobei
n und n' die mittlere Zusammensetzung der Gemische bedeutet, die durch an sich bekannte Hydrolyse von entsprechenden Chlorsilanen und anschließende Äquilibrierung erhalten werden, und $R^1$ gleich $R^2$ wird, wenn n'=o ist; in Mengen vom 0,01 bis 2,0 Gew.-%, bezogen auf die aktive Wasserstoffatome aufweisende Verbindungen vom Molekulargewicht 400—100000, verwendet werden.

2. Verfahren nach Anspruch 1, dadurch gekennzeichnet, daß die Siliciumverbindungen in Mengen von 0,1 und 1,0 Gew.-%, bezogen auf die aktive Wasserstoffatome aufweisenden Verbindungen vorzugsweise Polyäther, verwendet werden.

3. Verfahren nach Ansprüchen 1 und 2, dadurch gekennzeichnet, daß in der allgemeinen Formel R einen Methylrest bedeutet.

4. Verfahren nach Ansprüchen 1—3, dadurch gekennzeichnet, daß als aktive Wasserstoffatome aufweisende Verbindungen von Molekulargewicht 400—100000 mindestens zwei Hydroxylgruppen aufweisende Polyäther verwendet werden.

**Claims**

1. Process for the production of non-shrinking foams which contain urethane groups by the reaction of compounds with a molecular weight of from 400 to 100,000 which have at least 2 active hydrogen atoms with polyisocyanates in the presence of water and/or organic blowing agents, silicon compounds and optionally in the presence of catalysts and other auxiliary agents, characterised in that the silicon compounds used are mixtures of compounds of the general formula:

$$R^1R_2SiO—[R_2SiO]_n—[RR^2SiO]_{n'}—SiR_2R^1$$

wherein R denotes an alkyl or alkenyl group with up to 3 C atoms,
$R^2$ denotes a chloromethyl group,
$R^1$ represents a group $R^2$ or R,
n' is a whole number or fraction of from 0 to 9,
n is a whole number or fraction of from 0 to 9,
and $n + n' \leqslant 10$,

n and n′ representing the average composition of the mixtures, which are obtained by known hydrolysis of corresponding chlorosilanes and subsequent equilibration, and $R^1$ being the same as $R^2$ when n′=0, which mixtures of compound are used in quantities of from 0.01 to 2.0 % by weight, based on the compounds with a molecular weight of from 400 to 100,000 which have active hydrogen atoms.

2. Process according to Claim 1, characterised in that the silicon compounds are used in quantities of 0.1 and 1.0% by weight based on the compounds which have active hydrogen atoms, preferably polyethers.

3. Process according to Claims 1 and 2, characterised in that, in the general formula, R denotes a methyl group.

4. Process according to Claims 1—3, characterised in that the compounds with a molecular weight of 400—100,000 used which have active hydrogen atoms are polyethers having at least 2 hydroxyl groups.

**Revendications**

1. Procédé pour la préparation de mousses à groupes uréthanne ne se rétractant pas, par réaction de composé d'un poids moléculaire de 400 à 100.000, présentant au moins deux atomes d'hydrogène actifs, avec des polyisocyanates en présence d'eau et/ou d'agents porogènes organiques, de composés de silicium et éventuellement en présence de catalyseurs et d'autres additifs, caractérisé en ce que l'on utilise comme composés de silicium des mélanges de composés de formule générale

$$R^1R_2SiO-[R_2SiO]_n-[RR^2SiO]_{n'}-SiR_2R^1$$

dans laquelle:

R représente un reste alkyle ou alcényle jusqu'en $C_3$, de préférence un reste méthyle,
$R^2$ représente un reste chlorométhyle,
$R^1$ est un reste $R^2$ ou R,
n est un nombre entier ou fractionnnaire de 0 à 9,
nest un nombre entier ou fractionnnaire de 0 à 9,
$n + n' \leqslant 10$, et

n et n′ représentant la composition moyenne des mélanges, qui sont obtenus par hydrolyse connue en soi de chlorosilanes correspondants suivie d'équilibrage, et $R^1$ est égal à $R^2$ lorsque n′ est égal à 0, en quantités de 0,01 à 2,0% en poids, de préférence de 0,1 à 1,0% en poids, par rapport aux composés de poids moléculaire de 400 à 100.000 présentant les atomes d'hydrogène actifs.

2. Procédé selon la revendication 1, caractérisé en ce que l'on utilise les composés de silicium en quantités de 0,1 à 1,0% en poids, par rapport aux composés à atomes d'hydrogène actifs, de préférence des polyéthers.

3. Procédé selon les revendications 1 et 2, caractérisé en ce que R dans la formule générale représente un reste méthyle.

4. Procédé selon les revendications 1—3, caractérisé en ce que l'on utilise comme composés d'un poids moléculaire de 400—100.000 présentant des atomes d'hydrogène actifs des polyéthers présentant au moins 2 groupes hydroxyle.